# FASCICULE DE BREVET EUROPEEN

(11) **EP 0 552 361 B1**
(45) Date de publication et mention de la délivrance du brevet: **02.11.1995**
(21) Numéro de dépôt: 92918450.5
(22) Date de dépôt: 06.08.1992
(51) Int. Cl.: G01F 23/00, G01F 23/44

(54) **JAUGEUR DE NIVEAU POUR RESERVOIR DE TYPE A PALPEUR ASSERVI**
Servogeregelter Füllstandsmesser für einen Tank
TANK LEVEL GAUGE OF DRIVEN SENSOR TYPE

(30) Priorité: 09.08.1991 FR 9110257
(43) Date de publication de la demande: 28.07.1993
(73) Titulaire: INSTITUT FRANCAIS DU PETROLE, 92506 Rueil-Malmaison (FR); KHOI, Danny James, F-92506 Rueil-Malmaison (FR)
(72) Inventeur: KHOI, Danny, James, F-92506 Rueil-Malmaison (FR); GONZALEZ, Pierre, F-92500 Rueil-Malmaison (FR); BUFFENOIR, Denis, F-78400 Chatou (FR)
(86) Numéro de dépôt international: FR9200783
(87) Numéro de publication internationale: WO9303339

(56) Documents cités:
- WO-A-89/06346
- FR-A- 1 430 366
- GB-A- 1 015 118

## Description

La présente invention a pour objet un jaugeur de niveau pour réservoir, du type à palpeur asservi.

L'art antérieur comporte par exemple le brevet français FR-A-1 430 366, ayant pour inventeur Monsieur KHOI. Ce document montre un palpeur suspendu à un filin enroulé sur un tambour entrainé par un servomoteur qui est asservi aux efforts exercés sur le filin. Plus précisément, lorsque le palpeur se trouve au niveau à mesurer, une force de réaction égale et opposée à son poids apparent permet d'équilibrer l'ensemble.

En cas de variation du niveau, le poids apparent du palpeur va varier et la variation corrélative de la force de réaction sera détectée et provoquera la mise en route du servomoteur, dans un sens ou dans l'autre, jusqu'au positionnement du palpeur au niveau à jauger.

Ce type de jaugeur est donc connu depuis longtemps; des améliorations ont été proposés comme par exemple dans la demande de brevet française FR-A-2625313.

L'amélioration vis-à-vis du premier document cité se situe au niveau de l'auto alimentation, de la précision de la mesure, de la plus grande plage de mesure.

La présente invention peut être considérée comme une amélioration vis-à-vis de ce second document;

Un des buts de l'invention est un jaugeur qui, tout en ayant les caractéristiques du jaugeur divulgué par ce second document, soit d'une conception générale plus simple c'est-à-dire d'un prix de revient moindre.

De plus, le jaugeur selon la présente invention présente un très faible niveau de consommation électrique : à la fois pour son propre fonctionnement et pour une éventuelle transmission de données à distance. Une source d'énergie telle qu'un ensemble de cellules photovoltaïques par exemple est suffisant. Il peut même être envisagé, sans sortir du cadre de la présente invention, la transmission (et/ou le traitement) d'autres types de données telles que pression, température,... à l'intérieur du jaugeur selon l'invention.

En outre le jaugeur selon la présente invention permet d'éviter toute rupture du filin, par utilisation d'un accouplement magnétique capable de décrocher lors d'une traction trop importante dans le filin.

En outre, le présent jaugeur doit être capable de délivrer des mesures pour au moins deux interfaces différentes à l'intérieur d'un même réservoir.

Ces buts sont atteints grâce à un jaugeur du type défini en tête de la description et comportant :
- un tambour sur lequel est enroulé un filin à l'extrémité duquel est suspendu un palpeur asservi au niveau à mesurer;
- un servomoteur réversible d'entrainement dudit tambour;
- des moyens d'entrainement du tambour dans les deux sens;
- des moyens d'enregistrement de la rotation du tambour;
- des moyens de détection d'une variation de la force dans le filin, ladite force étant directement liée à la position relative du palpeur vis-à-vis du niveau à mesurer.

Selon l'invention, lesdits moyens de détection de la force dans le filin comportent un moyen mobile en rotation autour de l'axe de rotation du tambour uniquement lors d'une variation de la force dans ce filin, dont l'oscillation est limitée par des moyens d'amortissement et dont le mouvement permet la mesure de la force exercée sur le filin.

Préférentiellement lesdits moyens de détection de la variation de la force dans le filin comportent un transformateur différentiel dont la force de traction de sortie est liée à la tension (mécanique) dans le filin.

Ainsi le transformateur différentiel peut comporter un noyau lié au moyen oscillant, et un bobinage lié à une partie fixe du jaugeur.

Les moyens d'amortissement peuvent être avantageusement constitués d'un dispositif magnétique.

De façon particulière le dispositif magnétique est constitué d'au moins un aimant lié au moyen oscillant et d'une pluralité d'aimants liés à une partie fixe du jaugeur.

En outre, le servomoteur peut être un moteur pas à pas dont la rotation est déclenchée par une variation de la tension de sortie dudit transformateur différentiel par rapport à une tension de référence.

Avantageusement le jaugeur selon l'invention peut comporter des moyens destinés à assurer son auto-alimentation électrique, des moyens capables de détecter des anomalies de fonctionnement, des moyens destinés à empècher la rupture du filin.

En outre, le jaugeur selon l'invention peut détecter le niveau de plusieurs interfaces.

D'autres avantages et caractéristiques de l'invention seront mieux compris à la lecture de la description qui va suivre faite à titre indicatif et nullement limitatif, en référence aux dessins annexés sur lesquels :
- La figure 1 est une vue en coupe longitudinale du jaugeur selon l'invention;
- La figure 2 est une vue de côté du jaugeur selon l'invention;
- La figure 3 est une coupe montrant notamment les moyens de commande de l'entrainement du moteur;
- La figure 4 est une coupe montrant les moyens d'amortissement des moyens de détection de la variation de la force dans le filin,
- La figure 5 est une vue partielle en plan d'une carte de commande de l'ensemble selon l'invention.

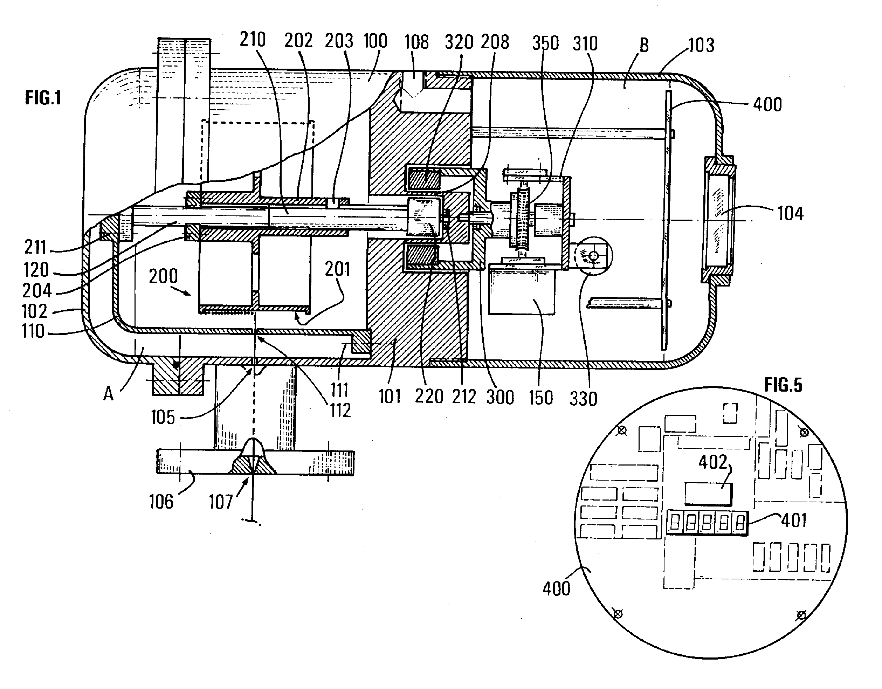

Sur la figure 1, les références 100 et 103 désignent de façon générale le carter du jaugeur, essentiellement cylindrique et dont l'intérieur est divisé en deux parties par une cloison étanche 101.

La partie A, à gauche de la cloison sur la figure 1, renferme les organes mécaniques tandis que la partie B anti-déflagrante renferme les constituants les plus sensibles du jaugeur.

La partie A peut être fermée à son extrémité par un capot 102, la rendant ainsi étanche au milieu ambiant, à l'exception d'un orifice 105 destiné au passage du filin.

Par ailleurs un pied 106 peut être fixé sur le carter 100 afin d'assurer la fixation de celui-ci au réservoir dans lequel doit s'effectuer la mesure. Un orifice 107 est prévu à l'aplomb de l'orifice 105, l'ensemble assurant le guidage vertical du filin.

Le volume A forme ainsi une enceinte quasi étanche, communiquant uniquement par l'orifice 105 avec le ciel du réservoir. Ce dernier peut couramment contenir des gaz à une pression de l'ordre de 25 Bars.

Le volume B, qui renferme l'ensemble des organes électromécaniques, est totalement isolé d'une part vis-à-vis du volume A et d'autre part vis-à-vis de l'atmosphère ambiante. Cette isolation est rendue nécessaire pour le bon fontionnement des organes présents à l'intérieur, mais aussi afin d' éviter qu'une éventuelle déflagration dans cette zone ne permette la propagation de la flamme vers l'extérieur du volume B.

Une fenêtre 104, située à l'extrémité du carter 103 permettra par exemple de lire l'affichage de la hauteur mesurée.

Un passage 108 pour les fils et câbles électriques est en outre prévu à partir du volume B, ce passage étant bien entendu obturé par exemple par un presse-étoupe afin de conserver l'isolation du volume B.

La partie mécanique, contenue dans le volume A, de construction connue, va maintenant être décrite. Cette partie comprend un tambour 200 sur lequel est enroulé le filin. Selon l'invention le filin est réalisé en kevlar (marque déposée) ou tout autre matériau présentant sensiblement la même résistance à la traction mais une densité nettement inférieure à celle des matériaux utilisés auparavant. Cette caractéristique est très avantageuse notamment vis-à-vis de la sensibilité du palpeur.

Au bout du filin est suspendu le palpeur qui sera de préférence semi-immergé au niveau de l'interface à mesurer. Le palpeur peut par exemple présenter la forme d'un disque de plastique de 140 mm de diamètre et ayant une masse d'environ 300 grammes.

Le tambour 200 d'axe horizontal présente de préférence une surface périphérique extérieure 201 usinée avec une très grande précision afin qu'une rotation d'un degré par exemple corresponde à une longueur de fil de 1 mm, ou d'un nombre fini de mm. Une relation simple existera de préférence entre l'angle de rotation du tambour et la longueur de fil déroulé.

Le tambour 200 est pourvu d'un moyeu central 202 solidaire en rotation mais non en translation d'un arbre d'entrainement central 210. Un ensemble comprenant par exemple une vis sans fin 120 engagée sur une partie taraudée du moyeu 202, coopérant avec une gorge et une clavette 203 dans l'arbre d'entrainement 210, peut assurer la rotation et la translation simultanées du tambour afin que le filin quitte toujours le tambour à L'aplomb de l'orifice 105.

Un carter 110 fixé par exemple sur la paroi de séparation 101 (par des vis 111) peut constituer un palier d'extrémité pour l'ensemble précité. Le carter 110 comporte bien entendu un orifice 112 aligné avec les orifices 105 et 107 de passage du filin.

L'autre appui de l'arbre 210 se situe de préférence dans l'épaisseur de la paroi 101. Un palier à roulement 212 peut être prévu à cet effet.

On obtient ainsi un couple de frottement en rotation minimal, tel qu'une variation très faible de l'ordre de 0,01 à 0,02 Newton de la force dans le filin, soit perceptible au niveau du palier.

Une partie mâle 220 d'un accouplement magnétique est avantageusement portée par un palier (non référencé) situé à proximité de la paroi centrale 101.

La partie complémentaire (femelle) 320 de l'accouplement magnétique est alors située en regard de la partie mâle 220. Une zone 208 de la paroi 101 en aluminium, de faible épaisseur, est interposée entre chaque partie (220 et 320) de l'accouplement magnétique.

Le couplage est ici assuré par un effet magnétique, à travers la paroi amagnétique 208. Ce couplage réalise l'entrainement en rotation, sans contact, d'éléments situés dans le volume A du jaugeur par des éléments liés en rotation au moteur c'est-à-dire situés dans le volume B et vice-versa.

De façon avantageuse, ce couplage peut être interrompu lorsqu'une surcharge existe au niveau du palpeur. Cette fonction de "décrochage" de l'accouplement en cas d'incident permet notamment d'empêcher la cassure du filin.

Dans une autre version du jaugeur selon l'invention, où le réservoir est sous faible pression, on peut avantageusement supprimer l'accouplement magnétique en disposant un arbre traversant la paroi 101. Ledit arbre traversant réalise ainsi la liaison en rotation des éléments mécaniques situés dans les volumes A et B. Bien entendu, des moyens d'étanchéité sont placés sur l'arbre, au niveau de la paroi 101, afin de conserver le caractère anti-déflagrant du volume B.

L'aménagement des éléments dans le volume A tel qu'il vient d'être décrit peut être considéré comme connu.

Le volume B comporte avantageusement :
- des moyens de détection d'une variation de la force de tension/traction dans le filin;
- des moyens de commande de l'entrainement d'un servo-moteur;
- des moyens d'amortissement des moyens de détection autour d'une position d'équilibre.

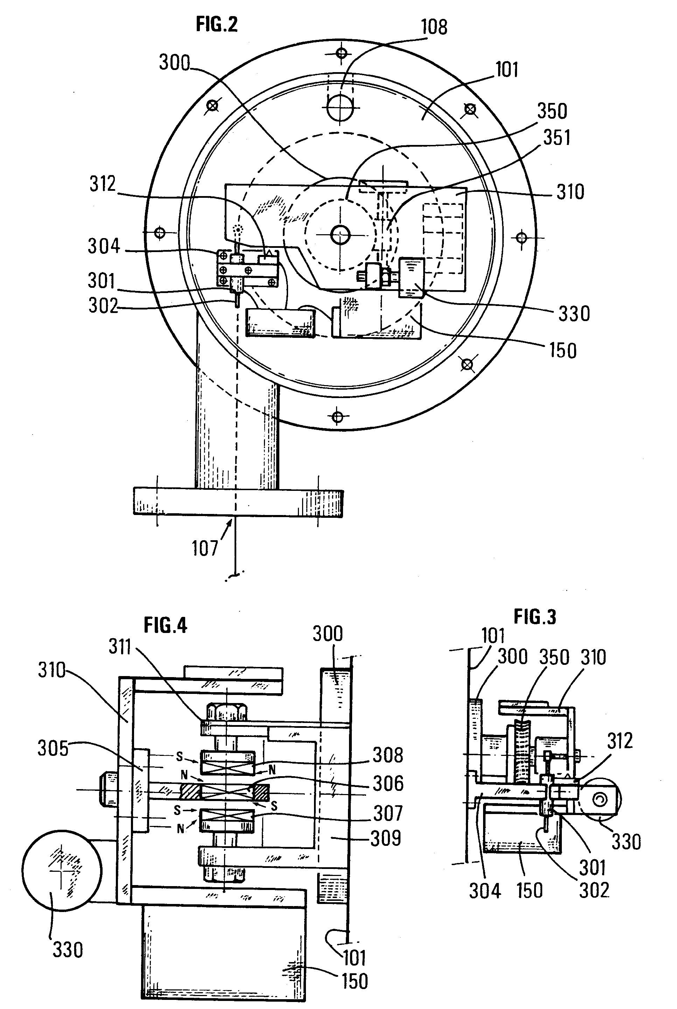

Les moyens de détection d'une variation de la force de traction dans le filin sont préférentiellement constitués d'un bras oscillant 310 qui va être décrit en relation avec la figure 2.

Sur le bras oscillant 310 sont fixés les moyens de commande de l'entrainement du moteur dont une vue en coupe est donnée par la figure 3, ainsi que les moyens d'asservissement du bras oscillant autour d'une position d'équilibre ou de référence.

Une ou plusieurs masselotte(s) d'équilibrage 330 peuvent en outre être fixées sur le bras oscillant si nécessaire.

La partie femelle 320 de l'accouplement magnétique est solidaire, via un support 300, d'un pignon 350 entrainé par une vis sans fin 351 d'axe vertical elle-même actionnée par un servomoteur 150 tel un moteur pas à pas.

A titre d'exemple le moteur choisi effectue 48 pas par tour, la démultiplication au niveau pignon 350 - vis sans fin 351 est de un centième et la circonférence du tambour 200 est égale à 480 mm de sorte qu'à chaque pas du moteur le palpeur réalise une course de un dixième de mm.

Il sera à la portée de l'homme de l'art de modifier la transmission constituée par le pignon 350 et la vis sans fin 351, en les remplaçant par un couple d'engrenages coniques ou cylindriques, à denture droite ou hélicoïdale. De plus, pour notamment améliorer le rendement de la transmission et réduire l'inertie sur l'arbre moteur, on pourra intercaler un réducteur à engrenages dans ces variantes de transmission.

Le moteur 150 est fixé sur le côté d'un bras oscillant. De l'autre côté du bras oscillant (vis à vis de son axe de rotation) est fixé le système de commande de l'entrainement du moteur. Ce système peut être constitué d'un transformateur différentiel dont le noyau 302 est lié au bras oscillant 310 et dont la bobine 301, fixe, est reliée par l'intermédiaire d'un support 304 à une partie fixe du jaugeur telle que la paroi 101.

Ainsi, sous l'effet d'une variation du poids apparent du palpeur le bras oscillant 310 est entrainé en rotation en même temps que le pignon 350, la vis sans fin 351, la pièce de liaison 300, la partie femelle 320 de l'acouplement magnétique et bien entendu le noyau 302 du transformateur différentiel.

Celui-ci enregistre donc cette variation qui se traduit par une variation de la tension aux bornes de sortie du transformateur, ce qui déclenche la commande du moteur. Plus précisément lorsque la ou les unité(s) de commande du moteur 150 détecte une variation de la tension aux bornes du transformateur différentiel, elle envoie à l'élément de pilotage du servo-moteur 150 une impulsion provoquant une rotation d'un pas de celui-ci, dans un sens ou dans l'autre selon la tension détectée... et ainsi de suite, jusqu'à ce que la tension détectée soit de nouveau égale à une tension de référence donnée c'est-à-dire jusqu'à stabilisation du bras oscillant en une position d'équilibre. Simultanément un élément de comptage-décomptage enregistre les variations du moteur. Le signal de sortie du transformateur différentiel indique également le sens de déséquilibre du bras oscillant d'où le sens de rotation du moteur nécessaire pour reéquilibrer le bras oscillant.

Selon une caractéristique intéressante de l'invention, l'unité de commande coopère avec une unité de traitement des informations afin que la tension détectée au bornes du transformateur puisse être comparée à l'une parmi plusieurs tensions de référence correspondant chacune à une interface.

En outre, , un système d'amortissement autour d'au moins une position d'équilibrage est prévu. Ce système permet d'éviter le "pompage" lors d'une stabilisation du palpeur autour du niveau à mesurer

La figure 4 montre un système d'amortissement avantageux. Celui-ci est essentiellement constitué :
- d'un aimant permanent 306 fixé par l'intermédiaire d'un support 305 sur le bras oscillant 310,
- de deux aimants permanents 307 et 308 semblables à l'aimant 306, et placés en vis-à-vis de celui-ci de telle sorte que les faces de même polarité s'opposent. Les aimants 307, 308 sont portés par un support 309, 311 fixé à un élément fixe du jaugeur, à la paroi 101 par exemple.

De la sorte, lorsque l'aimant 306 se trouve à égale distance de chacun des aimants 307, 308 la résultante des forces de répulsion est nulle.

Le système d'amortissement est positionné de telle sorte qu'à l'équilibre d'une interface, L'aimant 306 est à égale distance de chacun des aimants 307, 308. Lorsque le bras 310 s'incline, l'un des entrefer diminue tandis que l'autre augmente de la même valeur. De la sorte, la force de répulsion existant entre les aimants qui se rapprochent croît en fonction de l'inverse du carré de la valeur de l'entrefer tandis que la force de répulsion entre les aimants qui s'éloignent détroit selon la même loi. Un amortissement quasi parfait est ainsi obtenu.

Pour une autre interface, l'amortissement sera réalisé autour d'une autre position.

Le système d'amortissement qui vient d'être décrit est un exemple non limitatif. Tout autre système élastique remplissant la même fonction peut bien entendu être utilisé sans sortir du cadre de la présente invention.

On pourra notamment utiliser un système d'amortissement fondé sur un principe électromagnétique ou hydraulique.

Dans le premier principe, une spire en cuivre solidaire du bras 310 se déplace avec ledit bras à l'intérieur d'un champ magnétique annulaire. Le déplacement génère dans la spire un courant de Foucault créant une force contre-électromotrice qui s'oppose au déplacement, provoquant ainsi un amortissement.

Dans le deuxième principe, hydraulique, un piston constitué par une membrane déformable est lié audit bras oscillant. La membrane forme une paroi déformable d'un compartiment clos renfermant un fluide. Ledit compartiment communique avec une réserve de fluide par un orifice calibré ou gicleur.

Lorsque le bras 310 oscille, la membrane est entraînée dans le même mouvement, faisant varier ainsi le volume du compartiment. Le fluide est expulsé ou introduit suivant un écoulement régulé par la taille du gicleur, créant ainsi un amortissement hydraulique de l'oscillation du bras 310.

Comme il a déjà été brièvement expliqué plus haut les valeurs des poids apparents du palpeur à chaque interface sont de préférence obtenues par étalonnage, et les valeurs des tensions de référence correspondantes (V_{REF1}, V_{REF2}...) sont mémorisées dans un moyen de traitement de données afin d'asservir la tension de sortie du transformateur différentiel (301, 302) à une desdites valeurs de tension de référence.

En outre, comme il a déjà été énoncé en tête de la description, la consommation électrique du jaugeur selon l'invention est faible puisque le moteur ne tourne qu'en période de recherche de niveau. La consommation électrique des autres organes électriques est en outre très faible.

Avantageusement, le jaugeur selon l'invention est capable de détecter très rapidement et de façon très sûre toute anomalie.

En effet, en fonctionnement normal la tension de sortie du transformateur différentiel tend vers une tension de référence (le bras oscillant tendant vers sa position d'équilibre). En conséquence, toute variation de tension significative, supérieure à un certain seuil pendant un certain temps est liée à un disfonctionnement de l'appareil. Dans ce cas l'appareil sera capable de donner l'alarme et même de détecter certains types de pannes.

Par exemple :
- la perte (décrochement) du palpeur générera une tension négative constante d'une valeur donnée et mesurable;
- la panne du servo-moteur générera une tension anormalement élevée, positive ou négative selon que le palpeur est ou non immergé;
- le coincement du palpeur à l'intérieur du réservoir générera également une tension anormale.

Le jaugeur selon l'invention est tout à fait capable de reconnaître ces cas de figure et de générer en réponse un signal d'alarme.

De plus en cas de décrochage magnétique au niveau de l'accouplement (220, 320) la rotation anormalement grande du bras oscillant 310 entrainera l'actionnement d'un microrupteur 312. Celui-ci peut déclencher par exemple une alarme sonore mais surtout cette information sera enregistrée dans le système de traitement de données comme une "perte d'information" qui entrainera la remontée du filin jusqu'à une position extrème et la remise à zéro du compteur associé au moteur pas à pas.

Le contact entre le palpeur et une butée d'extrémité peut être enregistré comme un zéro absolu ou comme une hauteur de référence par tout système d'acquisition de données connu en soi.

En effet le jaugeur selon l'invention peut avantageusement être relié à un système d'acquisition et de traitement de données.

Les composants électriques du jaugeur selon l'invention sont essentiellement le transformateur différentiel 301, 302, le moteur pas à pas 150, les alimentations (non référencées).

Les commandes de ces organes ainsi qu'éventuellement les afficheurs sont de préférence regroupés sur une même carte 400 placée dans le volume B. Les fils ou câbles de liaison électrique peuvent sortir du volume B par exemple par la conduite 108 traversant la paroi de la cloison transversale 101.

Les informations délivrées par l'unité de commande du moteur peuvent être transmises via un bus vers une unité de traitement tel qu'un microcalculateur capable de recevoir et d'émettre d'autres types de données (par exemple pression, température à l'intérieur du réservoir) elles-mêmes délivrées par le jaugeur selon l'invention et/ou par un autre matériel.

Sans sortir du cadre de l'invention, les données fournies par le jaugeur peuvent aussi être transmises par voie Hertzienne, au moyen d'un circuit émetteur placée par exemple sur le sommet du jaugeur. Un récepteur peut être prévu afin de recevoir des ordres depuis un organe de commande, à distance.

Le jaugeur selon l'invention peut être télécommandé; on peut par exemple télécommander la mesure d'une interface huile/eau ou d'une interface huile/air, la remise à zéro du système...

En outre l'alimentation électrique du jaugeur selon l'invention peut être fournie par des cellules photovoltaïques puisque comme il a déjà été énoncé, tous les organes électriques (et électroniques) du système ont une faible consommation. Il est notamment à signaler qu'en position d'équilibre le moteur pas à pas est à l'arrêt et ne consomme donc pas d'énergie.

Bien entendu, d'autres modifications et/ou adjonctions pourront être faites par l'homme de métier au système qui vient d'être décrit sans sortir du cadre de la présente invention.

## Revendications

1. Jaugeur de niveau pour réservoir, du type à palpeur asservi, comprenant notamment:
- un tambour (200) sur lequel est enroulé un filin à l'extrémité duquel est suspendu un palpeur asservi au niveau à mesurer;
- un servomoteur réversible (150) d'entrainement dudit tambour;
- des moyens (350,351) d'entrainement du tambour dans les deux sens;
- des moyens d'enregistrement de la rotation du tambour;
- des moyens (310,301,302) de détection d'une variation de la force dans le filin, ladite force étant directement liée à la position relative du palpeur vis-à-vis du niveau à mesurer, caractérisé en ce que lesdits moyens de détection de la variation de la force dans le filin comportent un moyen (310) mobile en rotation autour de l'axe de rotation du tambour uniquement lors d'une variation de la force dans ce filin et dont l'oscillation est limitée par des moyens d'amortissement (305 à 311), le mouvement du moyen (310) permettant la mesure de la force exercée sur le filin.

2. Jaugeur de niveau selon la revendication 1 caractérisé en ce que lesdits moyens de détection de la variation de la force dans le filin comportent un transformateur différentiel (301, 302) dont la tension de sortie est liée à la force de traction (mécanique) dans le filin.

3. Jaugeur de niveau selon la revendication 2 caractérisé en ce que ledit transformateur différentiel comporte un noyau (302) lié au moyen oscillant (310) et un bobinage lié à une partie fixe (101) du jaugeur.

4. Jaugeur de niveau selon l'une quelconque des revendications 1 à 3 caractérisé en ce que lesdits moyens d'amortissement sont constitués d'un dispositif magnétique.

5. Jaugeur de niveau selon la revendication 4 caractérisé en ce que le dispositif magnétique est constitué d'au moins un aimant (306) Lié au moyen oscillant (310) et d'une pluralité d'aimants (307,308) liés à une partie fixe (101) du jaugeur.

6. Jaugeur de niveau selon la revendication 5 caractérisé en ce que lesdits aimants sont placés de telle sorte que les faces de même polarité des aimants fixes (307,308) et des aimants mobiles (306) s'opposent.

7. Jaugeur de niveau selon l'une quelconque des revendications précédentes caractérisé en ce que Ledit moyen oscillant (310) comporte en outre un contrepoids (330) destiné à équilibrer l'ensemble des organes portés par le bras oscillant.

8. Jaugeur de niveau selon l'une quelconque des revendications précédentes caractérisé en ce que le servomoteur (150) est un moteur pas à pas dont la rotation est déclenchée par une variation de la tension de sortie dudit transformateur différentiel (301,302) par rapport à une tension de référence.

9. Jaugeur de niveau selon l'une quelconque des revendications précédentes caractérisé en ce qu'il comporte en outre des moyens capables de détecter des anomalies de fonctionnement.

10. Jaugeur de niveau selon l'une quelconque des revendications précédentes caractérisé en ce qu'il comporte en outre des moyens destinés à assurer son auto-alimentation électrique.

11. Jaugeur de niveau selon l'une quelconque des revendications précédentes caractérisé en ce qu'il comporte en outre des moyens destinés à réaliser des mesures pour différentes interfaces.

12. Jaugeur selon l'une quelconque des revendications précédentes caractérisé en ce qu'il comporte en outre des moyens (220, 320), destinés à empècher la rupture du filin.

13. Jaugeur selon la revendication 12 caractérisé en ce qu'il comporte en outre des moyens de réétalonnage automatique des moyens d'enregistrement de la rotation du tambour en cas de rupture du filin.

14. Jaugeur selon l'une quelconque des revendications précédentes caractérisé en ce que ledit filin est constitué de Kevlar.

## Patentansprüche

1. Füllstandsanzeiger für Tanks vom Typ mit servogeregeltem Taster, insbesondere umfassend:
- eine Trommel (200), auf der ein Seil aufgewickelt ist, an dessen Ende ein dem zu messenden Niveau zugeordneter Taster aufgehängt ist;
- ein reversibler Servomotor (150) zum Antrieb dieser Trommel;
- Mittel (350, 351) zum Antrieb der Trommel in den beiden Richtungen;
- Mittel zum Aufzeichnen der Drehung der Trommel;
- Mittel (310, 301, 302) zur Erfassung einer Veränderung der Kraft im Seil, wobei diese Kraft direkt mit der relativen Position des Tasters gegenüber dem zu messenden Niveau verknüpft ist, **dadurch gekennzeichnet,** daß diese Erfassungsmittel für die Veränderung der Kraft im Seil ein Mittel (30) umfassen, das drehbeweglich um die Drehachse der Trommel allein bei einer Veränderung der Kraft in diesem Seil ist und dessen Schwingung begrenzt ist durch Dämpfungsmittel (305 bis 311), wobei die Bewegung des Mittels (310) das Messen der auf das Seil ausgeübten Kraft ermöglicht.

2. Füllstandsanzeiger nach Anspruch 1, **dadurch gekennzeichnet,** daß diese Mittel zum Erfassen der Veränderung der Kraft im Seil einen Differentialtransformator (301, 302) umfassen, dessen Ausgangsspannung mit der Zugkraft (mechanisch) im Seil verknüpft ist.

3. Füllstandsanzeiger nach Anspruch 2, **dadurch gekennzeichnet,** daß dieser Differentialtransformator einen Kern (302) umfaßt, der mit dem Oszillationsmittel (310) und einer Wicklung verknüpft ist, die mit einem festen Teil (101) des Füllstandsanzeigers verknüpft ist.

4. Füllstandsanzeiger nach einem der Ansprüche 1 bis 3, **dadurch gekennzeichnet,** daß die Dämpfungsmittel gebildet werden durch eine magnetische Einrichtung.

5. Füllstandsanzeiger nach Anspruch 4, **dadurch gekennzeichnet,** daß die magnetische Einrichtung gebildet wird durch wenigstens einen Magneten (306), der mit dem Oszillationsmittel (310) verknüpft ist und eine Vielzahl von Magneten (307, 308), die mit einem festen Teil (101) des Füllstandsanzeigers verknüpft sind.

6. Füllstandsanzeiger nach Anspruch 5, **dadurch gekennzeichnet,** daß diese Magneten derart angeordnet sind, daß die Flächen gleicher Polarität der festen Magneten (307, 308) und der beweglichen Magneten (306) sich gegenüberstehen.

7. Füllstandsanzeiger nach einem der vorhergehenden Ansprüche, **dadurch gekennzeichnet,** daß dieses Oszillationsmittel (310) im übrigen ein Gegengewicht (330) umfaßt, das dazu bestimmt ist, die Gesamtheit der vom Oszillations- oder Schwingarm getragenen Organe auszugleichen.

8. Füllstandsanzeiger nach einem der vorhergehenden Ansprüche, **dadurch gekennzeichnet,** daß der Servomotor (150) ein Schrittschaltmotor ist, dessen Drehung durch eine Veränderung der Ausgangsspannung dieses Differentialtransformators (301, 302) gegenüber einer Bezugsspannung ausgelöst wird.

9. Füllstandsanzeiger nach einem der vorhergehenden Ansprüche, **dadurch gekennzeichnet**, daß er im übrigen Mittel umfaßt, die in der Lage sind, Funktionsanomalien zu erfassen.

10. Füllstandsanzeiger nach einem der vorhergehenden Ansprüche, **dadurch gekennzeichnet,** daß er im übrigen Mittel umfaßt, die dazu bestimmt sind, seine elektrische Selbstversorgung sicherzustellen.

11. Füllstandsanzeiger nach einem der vorhergehenden Ansprüche, **dadurch gekennzeichnet,** daß er im übrigen Mittel umfaßt, die dazu bestimmt sind, Messungen für verschiedene Grenzflächen zu realisieren.

12. Füllstandsanzeiger nach einem der vorhergehenden Ansprüche, **dadurch gekennzeichnet,** daß er im übrigen Mittel (220, 320) umfaßt, die dazu bestimmt sind, ein Reißen des Seils zu verhindern.

13. Füllstandsanzeiger nach Anspruch 12, **dadurch gekennzeichnet,** daß er im übrigen Mittel zur automatischen Nacheichung der Aufzeichnungsmittel für die Drehung der Trommel im Falle eines Reißens des Seils umfaßt.

14. Füllstandsanzeiger nach einem der vorhergehenden Ansprüche, **dadurch gekennzeichnet,** daß dieses Seil aus Kevlar besteht.

## Claims

1. Level gauge for a tank, of the reactive probe type, comprising in particular:
- a drum (200) on which is wound a rope, on the end of which a reactive probe is suspended at the level to be measured;
- a reversible servo-motor (150) to drive the said drum;
- means (350, 351) to drive the drum in both directions;
- means for recording the rotation of the drum;
- means (310, 301, 302) for detecting a variation in the force in the rope, this force being directly linked to the relative position of the probe with regard to the level to be measured, characterised in that the said means for detecting the variation in the force in the rope comprise a mobile means (310) that rotates about the axis of rotation of the drum only when there is a variation in the force in this rope and whose oscillation is limited by damping means (305 to 311), the movement of the means (310) enabling the force exerted on the rope to be measured.

2. Level gauge as claimed in claim 1, characterised in that the said means for detecting the variation of force in the rope has a differential transformer (301, 302) whose output voltage is linked to the (mechanical) tractive force in the rope.

3. Level gauge as claimed in claim 2, characterised in that the said differential transformer has a core (302) linked to the oscillating means (310) and a winding connected to a fixed part (101) of the gauge.

4. Level gauge as claimed in one of claims 1 to 3, characterised in that the said damping means consist of a magnetic device.

5. Level gauge as claimed in claim 4, characterised in that the magnetic device consists of at least one magnet (306) connected to the oscillating means (310) and a plurality of magnets (307, 308) connected to a fixed part (101) of the gauge.

6. Level gauge as claimed in claim 5, characterised in that the said magnets are positioned so that the faces of same polarity of the fixed magnets (307, 308) and the mobile magnets (306) face each other.

7. Level gauge as claimed in any one of the previous claims, characterised in that the said oscillating means (310) has in addition a counter-weight (330) designed to balance the assembly of members borne by the oscillating arm.

8. Level gauge as claimed in any one of the previous claims, characterised in that the servo-motor (150) is a stepper motor whose rotation is triggered by a variation in the output voltage of the said differential transformer (301, 302) relative to a reference voltage.

9. Level gauge as claimed in any one of the previous claims, characterised in that it has in addition means that are capable of detecting operating anomalies.

10. Level gauge as claimed in any one of the previous claims, characterised in that it has in addition means designed to provide its own electricity supply.

11. Level gauge as claimed in any one of the previous claims, characterised in that it has in addition means designed to carry out measurements for different interfaces.

12. Level gauge as claimed in any one of the previous claims, characterized in that it has in addition means (220, 320) designed to prevent rupturing of the rope.

13. Level gauge as claimed in claim 12, characterized in that it has in addition means for the automatic recalibration of the means for recording the rotation of the drum in case of rope rupture.

14. Level gauge as claimed in any one of the previous claims, wherein the rope is made from Kevlar.
